# FASCICULE DE BREVET EUROPEEN

(11) **EP 1 124 716 B1**
(45) Date de publication et mention de la délivrance du brevet: **03.09.2003**
(21) Numéro de dépôt: 99950827.8
(22) Date de dépôt: 26.10.1999
(51) Int. Cl.: B60T 13/573

(54) **MAITRE-CYLINDRE A REACTION HYDRAULIQUE DYNAMIQUEMENT MODULABLE**
HAUPTZYLINDER MIT DYNAMISCH MODULIERBARER HYDRAULISCHER REAKTION
MASTER CYLINDER WITH DYNAMICALLY ADJUSTABLE HYDRAULIC REACTION

(30) Priorité: 26.10.1998 FR 9813408
(43) Date de publication de la demande: 22.08.2001
(73) Titulaire: Bosch Systèmes de Freinage, 93700 Drancy (FR)
(72) Inventeur: CARRE, Jean-Jacques, F-93340 le Raincy (FR); LEBOISNE, Cédric, F-75011 Paris (FR)
(74) Mandataire: Hurwic, Aleksander Wiktor
(86) Numéro de dépôt international: FR9902594
(87) Numéro de publication internationale: WO00024624

(56) Documents cités:
- WO-A-94/07722
- WO-A-98/03385

## Description

La présente invention concerne un maître-cylindre à réaction hydraulique, comprenant : un corps cylindrique délimitant une chambre de travail de volume variable remplie d'un fluide de freinage; un piston principal monté sélectivement coulissant dans la chambre de travail suivant une première direction axiale pour réduire le volume de cette chambre de travail; un alésage axial percé dans le piston principal et délimitant une chambre de réaction de capacité variable, soumise à une pression variable; un piston de réaction fermant la chambre de réaction et monté sélectivement coulissant dans l'alésage axial, suivant la première direction axiale, pour réduire la capacité de la chambre de réaction; et un clapet anti-retour autorisant sélectivement un écoulement de fluide depuis la chambre de réaction vers la chambre de travail, la chambre de réaction ayant une forme annulaire et communiquant sélectivement avec la chambre de travail à travers un passage axial ou à travers le clapet anti-retour, le piston de réaction étant étagé et présentant un téton axial, susceptible d'obturer sélectivement le passage axial, le clapet ayant une forme annulaire et comprenant une coupelle d'étanchéité.

Un maître-cylindre de ce type est intégré au dispositif de freinage décrit dans l'art antérieur par le brevet WO-A 98/03385.

Un tel dispositif de freinage présente l'avantage d'optimiser l'intensité de la force de freinage en cas de coup de frein brusque, notamment en retardant la montée de la force de réaction qui s'oppose à cette force de freinage.

Plus récemment, la préoccupation s'est développée, dans la conception des systèmes de freinage, de pouvoir faire varier la force de réaction en sens inverse du gradient de l'effort de freinage, de manière à optimiser l'exploitation de l'énergie de freinage exercée par le conducteur en cas de freinage intense et brusque.

La présente invention se situe dans ce contexte et a pour but de proposer un maître-cylindre à réaction hydraulique présentant une structure simple et offrant cette fonctionnalité.

A cette fin, le maître-cylindre de la présente invention, par ailleurs conforme à la définition générique qu'en donne le préambule ci-dessus, est essentiellement caractérisé en ce que le clapet a une forme annulaire et comprend une coupelle d'étanchéité maintenue dans une cage annulaire qui définit le passage axial et qui est percée d'orifices axiaux autorisant sélectivement un écoulement de fluide depuis la chambre de réaction vers la chambre de travail par déformation et contournement de la coupelle.

Selon un mode de réalisation possible de l'invention, le téton peut être traversé par un perçage qui communique avec la chambre de réaction, le clapet anti-retour étant installé sur une extrémité du perçage, qui communique avec la chambre de travail.

D'autres caractéristiques et avantages de l'invention ressortiront clairement de la description qui en est faite ci-après, à titre indicatif et nullement limitatif, en référence aux dessins ci-joints dans lesquels :
- la Figure 1 est une vue en coupe du dispositif de freinage connu. décrit dans le brevet EP-0 662 894 précité;
- la Figure 2 est une vue en coupe des organes spécifiques du maître-cylindre de l'invention. selon un premier mode de réalisation de ce dernier; et
- la Figure 3 est une vue en coupe des organes spécifiques du maître-cylindre de l'invention, selon un second mode de réalisation de ce dernier.

Le brevet antérieur EP- 0 662 894 décrit un système de freinage, qui comprend schématiquement un servomoteur pneumatique d'assistance 1 et un maître-cylindre 2.

Le servomoteur comprend lui-même une enveloppe rigide 3 séparée en deux chambres 3a et 3b, de façon étanche, par une cloison mobile 4, constituée d'une membrane 4a et d'une jupe rigide 4b, et susceptible d'entraîner un piston pneumatique 5 mobile à l'intérieur de l'enveloppe 3.

La chambre avant 3a, dont la face avant est fermée de façon étanche par le maître-cylindre 2, est en permanence raccordée à une source de dépression (non représentée) à travers un raccord 6.

La pression dans la chambre arrière 3b est contrôlée par un clapet pneumatique 7, commandé par une tige de commande 8, laquelle est reliée à une pédale de frein (non représentée).

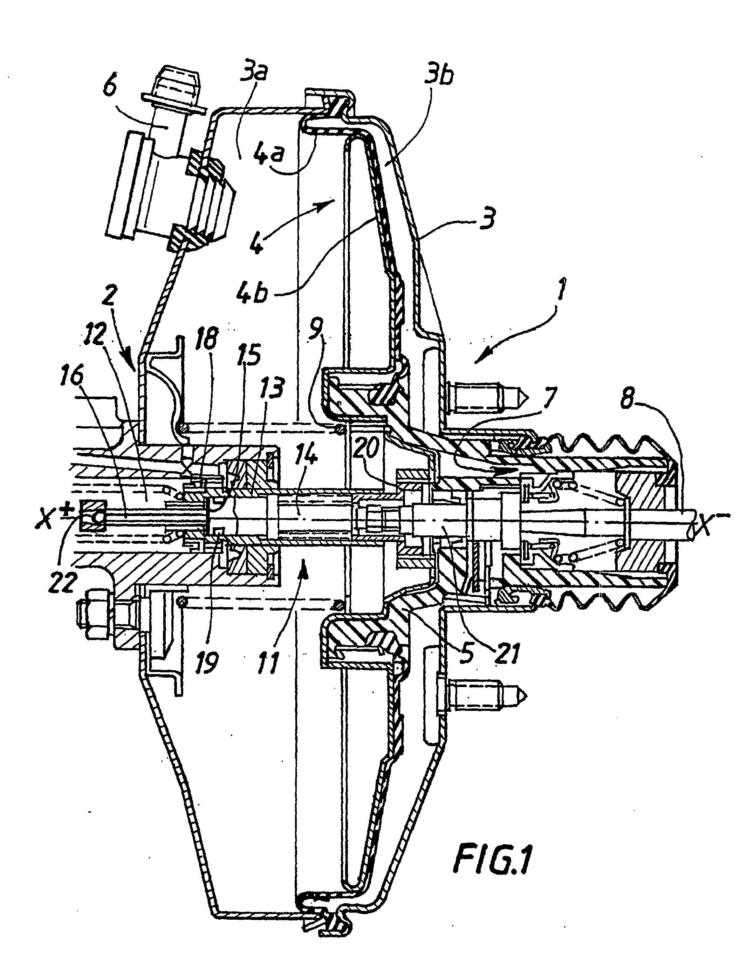

Lorsque la tige de commande 8 est en position de repos, en l'occurrence tirée vers la droite comme le montre la figure 1, le clapet pneumatique 7 établit une communication entre les deux chambres 3a et 3b du servomoteur.

La chambre arrière 3b étant alors soumise à la même dépression que la chambre avant 3a, le piston 5 est repoussé vers la droite, en position de repos, par un ressort 9.

L'actionnement de la tige de commande 8 vers la gauche a pour effet, dans un premier temps, de déplacer le clapet pneumatique 7 de façon qu'il isole l'une de l'autre les chambres 3a et 3b puis, dans un deuxième temps, de déplacer ce clapet pneumatique de façon qu'il ouvre la chambre arrière 3b à la pression atmosphérique.

La différence de pression entre les deux chambres alors ressentie par la membrane 4a exerce sur la cloison mobile 4 une poussée qui tend à la déplacer vers la gauche et à lui permettre d'entraîner le piston 5 qui se déplace à son tour en comprimant le ressort 9.

L'effort de freinage exercé sur la tige de commande 8, ou "force d'entrée" et l'effort d'assistance au freinage, ou "force d'assistance", résultant de la poussée de la cloison mobile 4, sont alors appliqués ensemble suivant la direction axiale X-X+ de la tige de poussée 8 en direction du maître-cylindre 2, et se conjuguent pour constituer la force d'actionnement de ce dernier.

Plus précisément, la force d'actionnement est appliquée sur l'ensemble piston 11 du maître-cylindre et en provoque le déplacement vers la gauche (sur la figure 1) suivant la direction axiale X-X+, ce qui entraîne une élévation de pression du liquide de freinage présent dans la chambre de travail 12 du maître-cylindre, et un actionnement du frein relié à cette dernière.

L'ensemble piston 11 est en fait composite et comprend un piston principal 13 percé d'un alésage axial 130 fermé de façon étanche par un piston de réaction 14 et un joint annulaire 19.

Le piston de réaction 14 est monté coulissant dans l'alésage 130, suivant la direction axiale X-X+, et à l'encontre de la force exercée par un ressort 24. Ce piston 14 délimite dans l'alésage 130 une chambre de réaction 15 qui communique avec la chambre de travail 12 à travers un clapet anti-retour 22 et à travers un canal 131 formé dans la partie antérieure du piston principal 13.

Comme décrit dans le brevet EP - 0 662 894, le clapet anti-retour 22 a pour fonction d'autoriser sélectivement un écoulement de fluide de freinage depuis la chambre de réaction 15 vers la chambre de travail 12.

En dehors du passage de fluide que permet le clapet anti-retour 22 entre la chambre de travail 12 du maître-cylindre 2 et la chambre de réaction 15, le piston principal 13 coulisse de façon étanche dans le maître-cylindre 2, l'étanchéité étant obtenue grâce au moins à un joint annulaire 18.

Le piston principal 13 est relié, par exemple à travers une bague 20, à la jupe rigide 4b de manière à recevoir une partie au moins de la force d'assistance exercée par l'intermédiaire de cette jupe.

Le piston de réaction 14 est quant à lui disposé axialement, en regard d'une tige de poussée 21 susceptible de lui transmettre au moins la force d'entrée exercée sur la tige de commande 8 vers la gauche sur les figures.

Selon l'invention, le piston de réaction 14 est étagé de manière à porter un téton axial 141, et la chambre de réaction 15, qui est de forme annulaire, communique avec la chambre de travail 12 soit à travers le clapet anti-retour 22 soit à travers un passage axial 23, selon que le téton axial obture, ou non, ce passage axial 23, cette obturation ayant lieu lorsque le piston de réaction est actionné avec une vitesse et une force suffisantes pour subir un déplacement relatif minimum prédéterminé par rapport au piston pneumatique 5.

Comme le téton axial 141 présente par définition une section d'aire inférieure à l'aire de la section principale du piston de réaction 14, le rapport de la force de réaction reçue par ce piston de réaction 14 dans le cas où le passage axial 23 est obturé à la force de réaction reçue par ce même piston 14 dans le cas où le passage axial 23 n'est pas obturé est égal au rapport de l'aire de la section du téton 141 à l'aire de la section principale du piston de réaction, la force de réaction étant donc sensiblement réduite lorsque le piston de réaction est actionné brusquement.

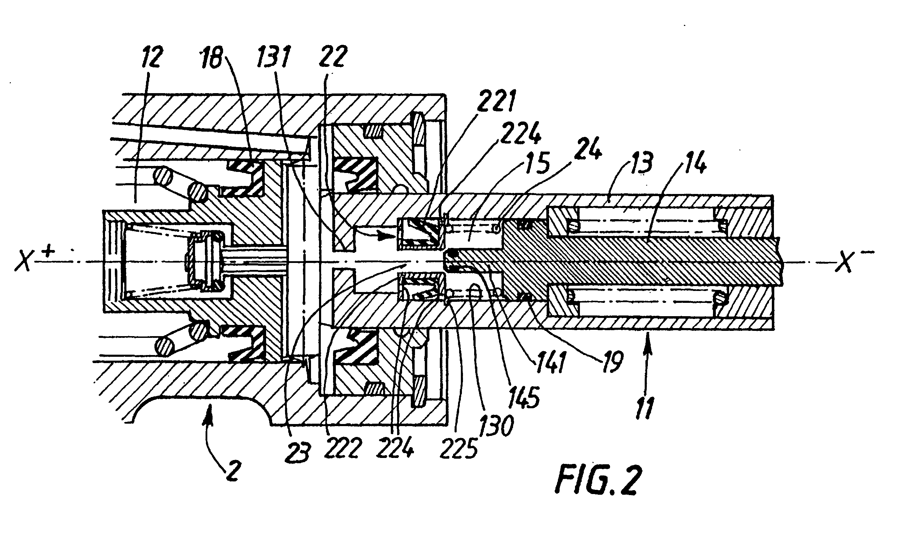

Selon un premier mode de réalisation possible de l'invention, illustré à la figure 2, le clapet 22 a une forme annulaire et comprend une coupelle d'étanchéité 221 qui est maintenue dans une cage annulaire 222 rendue solidaire du piston principal 13 grâce à des butées telles que 225.

La cage annulaire 222 définit, par son évidement central, le passage axial 23, et est percée d'orifices axiaux 224 qui autorisent un écoulement de fluide depuis la chambre de réaction 15 vers la chambre de travail 12 par déformation et contournement de la coupelle 221, lorsque le téton 141 pénètre dans le passage axial et l'obture de façon étanche grâce au joint annulaire 145 porté par ce téton.

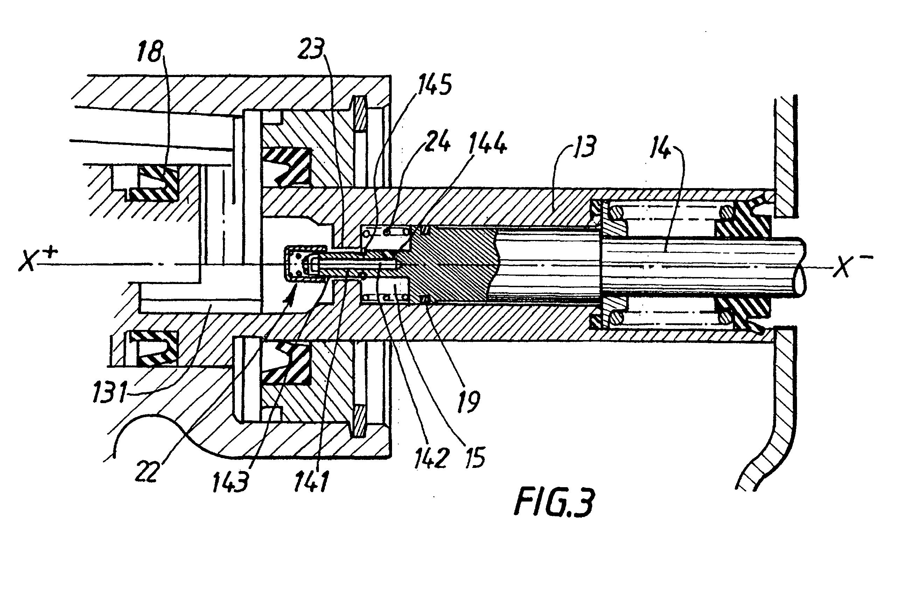

Selon un second mode de réalisation possible de l'invention. illustré à la figure 3, le téton 141 est traversé par un perçage 142 qui communique avec la chambre de réaction 15 par un canal 144, et le clapet anti-retour 22 est installé sur une extrémité 143 du perçage 142, qui se trouve à la même pression que la chambre de travail 12.

Le passage axial 23 est alors défini dans le piston principal 13 lui-même, et se trouve sélectivement obturé par le téton 141, grâce au joint annulaire 145 porté par ce dernier, selon la vitesse et la force d'actionnement du piston de réaction 14.

## Revendications

1. Maître-cylindre à réaction hydraulique, comprenant : un corps cylindrique (2) délimitant une chambre de travail (12) de volume variable remplie d'un fluide de freinage; un piston principal (13) monté sélectivement coulissant dans la chambre de travail (12) suivant une première direction axiale (X-X+) pour réduire le volume de cette chambre de travail; un alésage axial (130) percé dans le piston principal (13) et délimitant une chambre de réaction (15) de capacité variable, soumise à une pression variable; un piston de réaction (14) fermant la chambre de réaction (15) et monté sélectivement coulissant dans l'alésage axial (130), suivant la première direction axiale (X-X+), pour réduire la capacité de la chambre de réaction (15); et un clapet anti-retour (22) autorisant sélectivement un écoulement de fluide depuis la chambre de réaction (15) vers la chambre de travail (12), la chambre de réaction (15) ayant une forme annulaire et communiquant sélectivement avec la chambre de travail (12) à travers un passage axial (23) ou à travers le clapet anti-retour (22), le piston de réaction (14) étant étagé et présentant un téton axial (141), susceptible d'obturer sélectivement le passage axial (23) le clapet (22) ayant une forme annulaire et comprenant une coupelle d'étanchéité (221) **caractérisée en ce que** ladite coupelle est maintenue dans une cage annulaire (222) qui définit le passage axial (23) et qui est percée d'orifices axiaux (224) autorisant sélectivement un écoulement de fluide depuis la chambre de réaction (15) vers la chambre de travail (12) par déformation et contournement de la coupelle (221).

## Patentansprüche

1. Hauptzylinder mit hydraulischer Reaktion, mit: einem zylindrischen Körper (2), der eine Arbeitskammer (12) mit variablem Volumen, die mit einem Bremsfluid gefüllt ist, begrenzt; einem Hauptkolben (13), der in der Arbeitskammer (12) in einer ersten axialen Richtung (X-X+) selektiv verschiebbar angebracht ist, um das Volumen dieser Arbeitskammer zu verringern; einer axialen Bohrung (130), die im Hauptkolben (13) ausgebildet ist und eine Reaktionskammer (15) mit variablem Fassungsvermögen, die einem variablen Druck ausgesetzt ist, begrenzt; einem Reaktionskolben (14), der die Reaktionskammer (15) verschließt und in der axialen Bohrung (130) in der ersten axialen Richtung (X-X+) selektiv verschiebbar angebracht ist, um das Fassungsvermögen der Reaktionskammer (15) zu verringern; und einem Rückschlagventil (22), das selektiv eine Strömung von Fluid von der Reaktionskammer (15) zur Arbeitskammer (12) gestattet, wobei die Reaktionskammer (15) eine Ringform aufweist und selektiv mit der Arbeitskammer (12) durch einen axialen Durchgang (23) oder durch das Rückschlagventil (22) in Verbindung steht, wobei der Reaktionskolben (14) abgestuft ist und einen axialen Zapfen (141) aufweist, der den axialen Durchgang (23) selektiv verschließen kann, wobei das Ventil (22) eine Ringform aufweist und eine Dichtungsscheibe (221) aufweist, **dadurch gekennzeichnet, daß** die Scheibe in einem ringförmigen Käfig (222) gehalten wird, der den axialen Durchgang (23) definiert und der mit axialen Öffnungen (224) versehen ist, die selektiv eine Strömung von Fluid von der Reaktionskammer (15) zur Arbeitskammer (12) durch Verformung und Verdrehung der Scheibe (221) gestatten.

## Claims

1. Hydraulic-reaction master cylinder comprising: a cylindrical body (2) delimiting a variable-volume working chamber (12) filled with a brake fluid; a main piston (13) mounted so that it can slide selectively in the working chamber (12) in a first axial direction (X-X+) to reduce the volume of this working chamber; an axial bore (130) pierced in the main piston (13) and delimiting a variable-capacity reaction chamber (15) subject to a variable pressure; a reaction piston (14) closing the reaction chamber (15) and mounted so that it can slide selectively in the axial bore (130) in the first axial direction (X-X+) to reduce the capacity of the reaction chamber (15); and a non-return valve (22) selectively allowing fluid to flow from the reaction chamber (15) to the working chamber (12), the reaction chamber (15) being annular in shape and communicating selectively with the working chamber (12) through an axial passage (23) or through the non-return valve (22), the reaction piston (14) being stepped and having an axial stub (141), capable of selectively closing off the axial passage (23), the valve (22) being annular in shape and comprising a sealing cup (221), **characterized in that** the said cup is held in an annular cage (222) which defines the axial passage (23) and which is pierced with axial orifices (224) selectively opening fluid to flow from the reaction chamber (15) to the working chamber (12) by deformation of, and flow around, the cup (221).
